# FASCICULE DE BREVET EUROPEEN

(11) **EP 3 415 022 B1**
(45) Date de publication et mention de la délivrance du brevet: **24.12.2025**
(21) Numéro de dépôt: 18177162.7
(22) Date de dépôt: 12.06.2018
(51) Int. Cl.: A43B 1/00, A43B 5/04, A43B 5/16

(54) **ELEMENT DE CHAUSSURE DE SKI**
SKISCHUHELEMENT
SKI BOOT ELEMENT

(30) Priorité: 13.06.2017 FR 1755288
(43) Date de publication de la demande: 19.12.2018
(73) Titulaire: Rossignol Lange S.R.L., 31044 Montebelluna (IT)
(72) Inventeur: STEFAN, Matteo, 31050 Povegliano (TV) (IT)
(74) Mandataire: Novaimo

(56) Documents cités:
- WO-A1-81/02510
- US-A- 4 255 202
- US-A- 4 724 627
- US-A- 6 100 328
- US-A1- 2013 298 427

## Description

### Domaine technique de l'invention

L'invention concerne un élément d'une chaussure de sport comprenant au moins une paroi plastique, comme par exemple tout ou partie d'une coque, par exemple un bas de coque, un collier, ou une languette, ou une semelle, notamment de chaussure de ski alpin, de ski de fond ou de ski de randonnée, et une chaussure de sport en tant que telle comprenant un tel élément. Elle concerne particulièrement tout ou partie d'une chaussure de ski. Elle concerne aussi un procédé de fabrication d'un tel élément de chaussure de sport.

### État de la technique

Une chaussure de ski exige d'une part une rigidité et une résistance importantes et d'autre part un niveau de confort élevé. En effet, une telle chaussure subit de nombreux efforts lors de son utilisation et doit par conséquent être dotée d'une bonne résistance. Une forte rigidité est aussi nécessaire pour atteindre une bonne performance de la chaussure qui, en tant qu'intermédiaire entre le skieur et le ski, transmet les efforts du skieur au ski afin de guider ce dernier.

Ainsi, dans le cas d'une chaussure de ski alpin, on caractérise souvent la chaussure de ski par son indice de « flex », qui représente les propriétés de flexion avant-arrière de la chaussure. Cet indice de flex représente l'effort nécessaire pour atteindre une certaine flexion vers l'avant du collier par rapport au bas de coque d'une chaussure de ski, et permettre à la cheville de l'utilisateur de pivoter. Une telle flexion de l'arrière vers l'avant, caractérisée par l'indice de flex, est un indicateur important du comportement d'une chaussure de ski nécessaire au skieur dans le choix de sa chaussure de ski de manière fiable. Plus l'indice de flex est important, plus la chaussure de ski sera raide en flexion avant-arrière, et donc, réactive et précise. A contrario, plus l'indice de flex est faible, plus la chaussure de ski sera confortable. Le choix du flex d'une chaussure de ski représente donc un compromis entre ces caractéristiques contradictoires, sachant toutefois que le flex est nécessairement élevé pour la performance minimale de la chaussure de ski, comme rappelé ci-dessus. Le confort de la chaussure de ski est atteint par un chausson interne plus souple, qui atténue l'inconfort induit par la coque externe rigide.

Les éléments d'une chaussure de ski qui lui confèrent sa rigidité sont généralement fabriqués par injection de plastique. Pour augmenter la raideur en flexion et/ou le flex d'une chaussure de ski, les fabricants peuvent par exemple épaissir les parois des différents éléments, tels que la coque, le collier, la semelle, ou encore les contreforts (etc.). Toutefois, une telle approche contribue à augmenter la quantité de matière utilisée. L'augmentation de la raideur en flexion et/ou du flex d'une chaussure de ski induit alors l'obtention une chaussure de ski plus lourde, plus volumineuse et plus chère.

De plus, la conception et la fabrication des chaussures de ski doit respecter diverses exigences ou objectifs parmi lesquels :
- les éléments constitutifs de la chaussure de ski ont souvent une forme géométrique complexe pour épouser la forme du pied. Leur fabrication par injection de plastique demande une grande stabilité dimensionnelle tant pour le confort de l'utilisateur que pour l'aspect esthétique de la chaussure de ski.
- Les chaussures de ski doivent être adaptées à une utilisation par des températures très basses et donc offrir une bonne isolation thermique.
- Les chaussures de ski doivent être capables d'absorber l'énergie d'un choc pour préserver le pied de son utilisateur.
- Les chaussures de ski doivent être chimiquement compatibles avec l'environnement extérieur, notamment, les matériaux des chaussures de ski doivent être résistants à l'eau.
- Enfin, les chaussures de ski doivent être aussi légères que possible pour soulager le skieur lors de son utilisation, aussi bien en skiant, en marchant ou lors de phases de montée en randonnée.

Plus généralement, la maitrise de la propriété de flexion dans la direction avant-arrière et/ou latéralement de toute chaussure de sport, particulièrement d'une chaussure plutôt rigide de pratique d'un sport de glisse, est importante. En particulier, l'indice de flexion doit être élevé pour atteindre une bonne performance de ces chaussures dans la pratique du sport, particulièrement pour un sport de glisse, c'est-à-dire que la structure de la chaussure doit être telle qu'elle résiste fortement au pivotement vers l'avant du bas de jambe d'un utilisateur, principalement dans le cas d'une chaussure de ski alpin.

Le document US 2013/298427 A1 se rapporte à un élément de chaussure de sport, comprenant tout ou partie d'une paroi latérale / frontale / arrière / inférieure où un matériau thermoplastique est utilisé pour piéger des microbilles de verre afin de façonner la structure de support autour du membre d'un utilisateur.

### Objet de l'invention

Le but de l'invention est de fournir un élément de chaussure de sport, notamment formant tout ou partie de la paroi externe d'une chaussure de sport, remédiant à tout ou partie des inconvénients de l'état de la technique mentionnés ci-dessus, et améliorant ainsi les éléments de chaussure de sport connus.

En particulier, l'objet de l'invention est de fournir un article selon la revendication 1, avec des modes de réalisation préférés dans les revendications dépendantes 2 à 9, ainsi qu'une chaussure comprenant ledit article, selon la revendication 10, avec des modes de réalisation préfères dans la revendication 11, et un procède selon la revendication 12, avec des modes de réalisation préférés dans les revendications dépendantes 13 et 14.

A cet effet, l'invention repose sur un élément de chaussure de sport, comprenant tout ou partie d'une paroi destinée à former au moins une partie d'une paroi latérale et/ou frontale et/ou arrière et/ou inférieure d'une chaussure de sport, caractérisé en ce que tout ou partie de sa paroi comprend un matériau comprenant un polymère et une charge de microbilles creuses.

Ladite paroi comprenant un polymère et une charge de microbilles peut être une paroi rigide.

Ladite paroi peut comprendre une proportion de microbilles comprise entre 5% et 25% inclus, voire entre 10% et 15% inclus, du poids de ladite tout ou partie de paroi de l'élément de chaussure de sport.

Les microbilles peuvent avoir un diamètre moyen compris entre 15 et 25 µm et/ou une densité comprise entre 0,30 et 0,60 g/cm3. Les microbilles peuvent avoir une résistance à une compression supérieure ou égale à 1000 bars, voire à 1100 bars.

Les microbilles peuvent être des microbilles de verre ou des microbilles de polymère ou des microbilles de plastique ou des microbilles de céramique.

Ladite paroi comprenant un polymère et une charge de microbilles peut avoir un module de flexion supérieur ou égal à 100 MPa, et/ou présenter une rigidité supérieure ou égale à la rigidité d'un élément de même forme et constitué uniquement d'un polyuréthane d'une dureté de 45 Shore D.

Le polymère peut être un polymère thermoplastique, en particulier un polyuréthane thermoplastique.

Le polymère peut présenter une dureté supérieure ou égale à celle d'un polyuréthane de même forme et de dureté égale 45 Shore D et/ou le polymère peut présenter une dureté comprise entre 50 et 60 Shore D inclus, et/ou le polymère peut comprendre un module de flexion compris entre 100 et 200 MPa inclus.

L'élément de chaussure de sport peut être destiné à contribuer à une raideur en flexion d'une chaussure de sport, notamment l'élément peut former tout ou partie d'une coque externe, ou d'un bas de coque, ou d'un collier, ou d'une languette de la chaussure de sport.

L'élément de chaussure de sport peut former tout ou partie d'une semelle de chaussure et/ou peut former au moins un trottoir de chaussure de sport.

L'invention porte aussi sur une chaussure de ski, caractérisée en ce qu'elle comprend au moins un élément de chaussure de sport tel que décrit précédemment.

La chaussure de ski peut comprendre un collier articulé sur un bas de coque, et le collier et/ou le bas de coque peuvent être des éléments de chaussure tels que décrits précédemment.

L'invention porte aussi sur un procédé de fabrication d'un élément de chaussure de sport tel que décrit précédemment, caractérisé en ce qu'il comprend une étape d'injection dans un moule d'injection d'un matériau comprenant un polymère et une charge de microbilles creuses.

Le procédé de fabrication d'un élément de chaussure de sport peut comprendre une étape de granulation comprenant la fabrication du premier matériau par l'incorporation de microbilles dans un polymère, comprenant une étape d'enrobage de microbilles par une couche du matériau polymère.

Le procédé de fabrication d'un élément de chaussure de sport peut comprendre une deuxième étape d'injection d'un deuxième matériau différent du premier matériau dans le même moule d'injection selon un principe de co-injection ou de surinjection.

### Description sommaire des dessins

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique d'une chaussure de ski selon un mode de réalisation de l'invention.
La figure 2 est une vue microscopique d'un matériau mis en œuvre selon un mode de réalisation de l'invention.
La figure 3 est un graphique d'évolution de propriétés physiques du matériau constitutif d'une coque de chaussure de ski en fonction de sa composition.
La figure 4 est un premier logigramme d'un procédé de fabrication d'un élément de chaussure de sport selon un mode de réalisation de l'invention.

### Description de modes préférentiels de l'invention

Dans la description suivante, on suppose que la chaussure repose sur un sol horizontal. D'autre part, nous appellerons face externe d'un élément de chaussure sa surface orientée vers l'extérieur de la chaussure et face interne une surface orientée vers l'intérieur de la chaussure, du côté du pied.

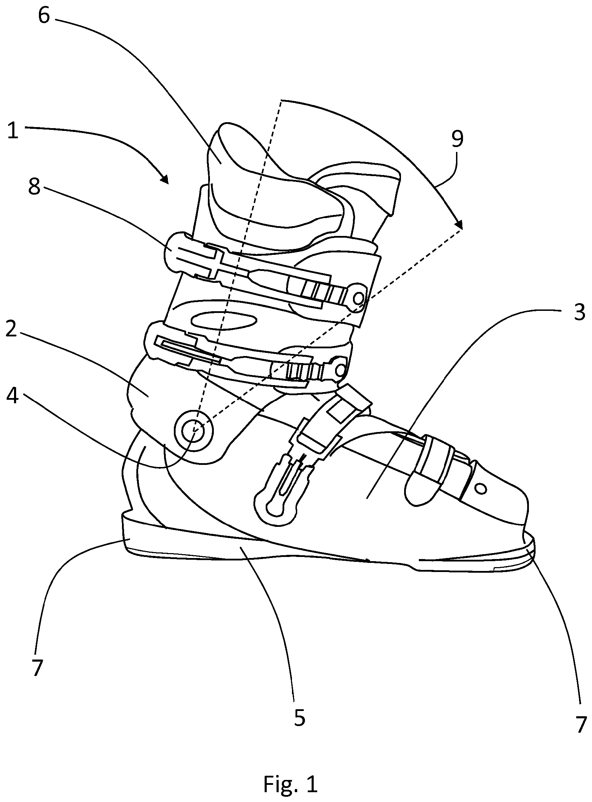

La figure 1 illustre une chaussure de ski 1 selon un mode de réalisation de l'invention. Selon ce mode de réalisation, la chaussure de ski est adaptée à la pratique du ski alpin ; en variante, l'invention est implémentée pour une chaussure de ski de fond, de ski de randonnée, voire même de surf des neiges. La chaussure de ski selon le mode de réalisation comprend une coque externe rigide formée de plusieurs éléments obtenus par injection plastique. La coque comprend notamment principalement deux éléments : un collier 2 et un bas de coque 3, le collier étant articulé sur le bas de coque 3 autour d'un axe de liaison formant un axe d'articulation 4, positionné sensiblement au niveau de l'articulation de la cheville..

Le bas de coque 3 s'étend d'une semelle 5 de marche jusqu'au niveau de l'axe d'articulation 4, présente une forme globale destinée à entourer le pied d'un skieur et comprend une ouverture vers le haut au niveau de la cheville d'un skieur. La semelle 5 est prolongée vers ses deux extrémités avant et arrière par des trottoirs 7 de format adapté pour la coopération avec les mâchoires d'un dispositif de fixation de chaussure de ski. La surface de marche de la semelle 5, en contact avec le sol lors de la marche, peut être réalisée directement monobloc sur le bas de coque 3, ou rapportée, par exemple en utilisant des talonnettes rapportées, à l'avant et/ou à l'arrière. La hauteur des trottoirs 7 et la forme générale de la semelle est normée afin de pouvoir coopérer avec les mâchoires des dispositifs de fixation standard. La semelle 5 et les trottoirs 7 ne peuvent donc pas faire l'objet d'une mise au point pour ajuster la rigidité de la chaussure de ski. La semelle 5 et les trottoirs 7 sont considérés comme indéformables en comparaison avec les autres parties de la chaussure de ski. En ski alpin, lorsque la chaussure est engagée dans les mâchoires des dispositifs de fixation, la semelle s'étend selon un plan sensiblement parallèle au plan du ski.

Le collier 2 enveloppe une partie inférieure du tibia et du mollet d'un skieur. Il s'étend sensiblement de la cheville jusqu'au bas de jambe d'un skieur.

Le bas de coque 3 et le collier 2 sont très rigides, et comprennent au moins une ouverture délimitant deux rabats positionnés de part et d'autre de cette ouverture, qui permettent par leur écartement une ouverture suffisante de la coque externe rendant possible le chaussage et le déchaussage de la chaussure de ski par un skieur. Pour cela, la chaussure de ski comprend également des boucles de serrage 8, agencées sur la coque externe, permettant de serrer d'une part le bas de coque contre le pied et d'autre part le collier contre le tibia et le bas de jambe, en rapprochant leurs rabats mentionnés ci-dessus, pour maintenir la coque externe rigide fermée autour du pied et du bas de jambe du skieur lorsqu'il a chaussé la chaussure de ski.

Enfin, selon un autre mode de réalisation, la coque externe rigide pourrait comprendre une languette s'étendant à l'avant de la chaussure depuis le dessus du bas de coque jusqu'en haut du collier. L'utilisation d'une telle languette, en complément du bas de coque et du collier permet par exemple de concevoir un bas de coque et/ou un collier plus ouvert et donc facilitant l'insertion du pied dans la chaussure.

La coque externe rigide forme donc une chaussure entourant complètement le pied et le bas de jambe du skieur. Comme cette coque externe est très rigide, un chausson de confort 6 est inséré dans la coque externe, pour assurer un bon confort du skieur. Ce chausson de confort 6 est amovible et la coque externe et le chausson de confort forment finalement deux chaussures distinctes superposées, complémentaires.

Comme mentionné ci-dessus, le collier 2 est monté mobile en rotation par rapport au bas de coque 3 autour de l'axe d'articulation 4. La liaison en rotation exige néanmoins une certaine force pour être actionnée car le bas du collier est en appui sur le bas de coque. Le mouvement de rotation vers l'avant du collier exige donc des déformations du bas de coque et/ou du collier, qui s'oppose à ce mouvement de rotation du fait de leur rigidité. La résistance au mouvement de rotation peut être croissante avec l'amplitude de la rotation. Autrement dit, l'effort nécessaire pour incliner le collier vers l'avant par rapport au bas de coque augmente à mesure qu'on incline le collier. Ainsi, on peut caractériser cette propriété de flexion de la chaussure de ski par une force de flexion nécessaire pour incliner le collier par rapport au bas de coque selon une orientation 9 donnée, illustrée schématiquement sur la figure 1. L'indice de « flex » de la chaussure de ski est un indicateur de cette propriété de flexion vers l'avant, et représente indirectement un indicateur de son aptitude à transmettre à un ski les impulsions d'un skieur. Plus le flex est important, plus la chaussure de ski sera réactive et précise. Le bas de coque, le collier (et éventuellement la languette lorsqu'il y en a une) sont des éléments de la chaussure de ski qui contribuent particulièrement à définir son flex, et plus précisément dont les propriétés de leur paroi contribuent à définir son flex. En effet, de manière générale, le bas de coque remonte dans le collier, ce qui freine la rotation du collier autour de son axe d'articulation et limite la flexion du collier vers l'avant, du fait de la rigidité des parois avant et arrière de la partie supérieure du bas de coque qui coopèrent avec les parois internes du collier. Ce flex ou propriété de raideur en flexion est généralement mesuré par un indice de flex, comme explicité précédemment. En remarque, la semelle 5 de la coque externe ne participe pas ou peu à la définition du flex, mais participe à la définition de la raideur de la partie basse du bas de coque, importante pour des raisons normatives.

On définit un élément de la chaussure de ski, comme tout ou partie de la coque, du bas de coque, du collier, ou de la languette, voire de la semelle, comprenant au moins une partie de la paroi externe de la coque rigide de la chaussure, participant ainsi à la définition du flex de la chaussure. Ainsi, l'élément de chaussure de ski forme au moins une partie d'une paroi latérale et/ou frontale et/ou arrière de la chaussure de ski, voire, dans une moindre mesure, d'une paroi inférieure de la chaussure de ski. L'épaisseur de la paroi peut être comprise entre 1 mm et 15 mm inclus. Cet élément, qui contribue à définir le flex (la raideur en flexion) de la chaussure, peut être déformé ou contraint sous l'effet d'une force de flexion exercée par la jambe d'un skieur sur la chaussure de ski.

Selon le mode de réalisation de l'invention, l'élément de chaussure de ski est le bas de coque et/ou le collier, fabriqué à partir d'un procédé d'injection. En particulier, l'élément de chaussure de ski comprend un matériau 10 comprenant un polymère 11 et une charge mélangée au polymère. Dans l'exemple de réalisation envisagé, la paroi des deux éléments bas de coque et collier est intégralement formée à partir de ce matériau 10.

Le polymère peut être du polyuréthane, notamment du polyuréthane d'une densité comprise entre 1 et 1,5 g/cm3, notamment entre 1,1 et 1,2 g/cm3. En variante, le polymère pourrait également être tout autre matériau thermoplastique tel qu'un polypropylène, un polyamide, un polycarbonate, un polyétherimide, un polyphénylsulfone, ou encore un polymère styrénique tel que l'ABS.

La charge comprend des microbilles 12 de verre creuses. Les microbilles 12 de verre ont avantageusement un diamètre moyen compris entre 15 et *25* µm, notamment un diamètre moyen d'environ 20 µm. Le diamètre de toutes les microbilles de verre n'est pas nécessairement identique. Certaines microbilles de verre peuvent être plus ou moins grosse, voire ne pas avoir une forme parfaitement sphérique. Par « diamètre moyen », on comprend la moyenne des diamètres de l'ensemble des microbilles de la charge. Dans le cas d'une microbille non parfaitement sphérique, le diamètre d'une microbille peut être défini comme la moyenne de tous les diamètres de la microbille ou le diamètre de la sphère dans laquelle la microbille est inscrite. Les microbilles de verre sont des sphères creuses et remplies d'air. Le verre peut être du borosilicate, notamment du borosilicate de soude et de chaux. Le borosilicate et notamment le borosilicate de soude et de chaux est résistant à l'eau. Le contact de la chaussure de ski sur de la neige ne risque donc pas d'altérer les microbilles de verre. Dans tous les cas, la densité de la charge est inférieure à la densité du polymère, alors que la rigidité de la charge est supérieure à celle du polymère.

L'épaisseur d'une paroi d'une microbille peut être globalement uniforme et comprise entre 0.5 et 1.5 µm. Le volume total d'une microbille de verre est donc majoritairement occupé par de l'air. La densité des microbilles 12 de verre est comprise entre 0,30 et 0,60 g/cm3, notamment la densité peut être de l'ordre de 0.46 g/cm3. En remarque, la densité du borosilicate est d'environ 2.3 g/cm3. Grâce à leur forme sphérique, les microbilles 12 de verre ont une haute résistance à la compression, soit une résistance à la compression supérieure ou égale à 1000 bars, voire supérieure ou égale à 1100 bars.

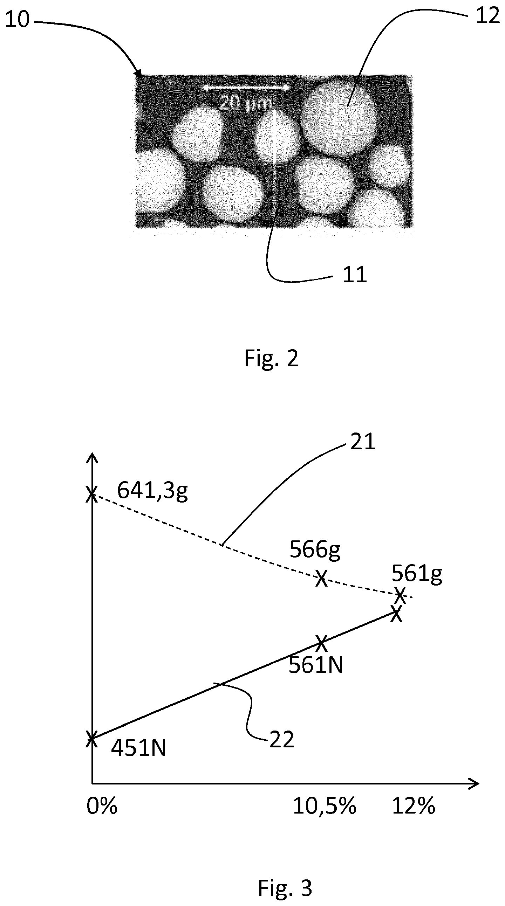

Les microbilles 12 de verre sont mélangées avec le polymère 11 : cet ensemble forme un matériau 10, qui peut être mis en œuvre dans un procédé d'injection de l'élément pour former tout ou partie de la paroi de l'élément de chaussure de ski. La figure 2 représente une vue en coupe micrographique de ce matériau 10. On distingue nettement les microbilles 12 de verre au milieu du polyuréthane. Les microbilles de verre sont espacées les unes des autres et complètement enrobées de polyuréthane.

Par l'ajout de cette charge formée par les microbilles 12 de verre creuses, la rigidité de l'élément de chaussure de ski est supérieure à la rigidité d'un élément qui aurait la même forme et serait constitué uniquement du polymère 11. On constate aussi que l'utilisation de ce polymère chargé permet d'augmenter le flex d'une chaussure de ski par rapport à une même chaussure à géométrie et épaisseurs de parois similaires/identiques, qui serait obtenue avec un matériau sans microbille de verre. Cette augmentation du flex de la chaussure de ski permet d'imaginer plusieurs modifications des chaussures de ski. Si le fabriquant souhaite privilégier le confort de la chaussure de ski, il peut envisager une réduction de l'épaisseur des parois de l'élément tout en maintenant le flex de la chaussure de ski à une même valeur, tout en réduisant par ailleurs le poids total de la chaussure. En variante, le fabriquant peut envisager l'utilisation d'un polymère moins rigide, et par exemple moins cher, et compenser la perte de rigidité par l'intégration de microbilles de verre pour conserver une valeur de flex identique aux chaussures de l'état de la technique. Enfin, le matériau retenu pour fabriquer l'élément de chaussure permet naturellement facilement d'augmenter le flex et donc la raideur en flexion d'arrière en avant d'une chaussure de ski.

En complément, il est intéressant de noter que du fait de la rigidité d'un tel matériau, il pourra avantageusement être disposé dans la paroi de chaussure de ski au niveau des zones subissant des contraintes élevées, comme par exemple la partie basse du bas de coque, notamment au niveau de la semelle et/ou des trottoirs 7 avant et/ou arrière.

De plus, grâce à la présence d'air à l'intérieur des microbilles de verre, leur densité est nettement inférieure à la densité du polyuréthane (la densité du polyuréthane étant comprise entre 1.1g/cm3 et 1.2 g/cm3). Ainsi, plus on augmente la proportion de microbilles de verre et plus le matériau obtenu est léger. La solution retenue présente donc le deuxième avantage de permettre d'obtenir un allégement d'un élément d'une chaussure de ski et par conséquent d'une chaussure de ski. En complément, l'air contenu dans les microbilles de verre joue le rôle d'isolant thermique. La solution retenue présente ainsi l'avantage complémentaire d'augmenter l'isolation thermique de la coque externe de la chaussure de ski.

La figure 3 illustre par une première courbe 21 en pointillés l'évolution de la masse d'une coque externe de chaussure de ski entièrement moulée avec du polyuréthane comprenant une proportion variable de microbilles 12 de verre. On constate par exemple que l'intégration de microbilles de verre dans le polyuréthane dans une proportion de 10.5% en poids permet un gain de masse d'environ 12% de la masse d'origine d'une coque sans microbille. L'intégration de microbilles de verre dans le polyuréthane dans une proportion de 15% en poids permet un gain de masse d'environ 100g pour une coque pesant 641.3g sans microbilles de verre.

En complément, la figure 3 illustre par une deuxième courbe 22 en trait plein l'évolution du flex de la chaussure de ski alpin en fonction du pourcentage de microbilles de verre présentes dans le polyuréthane. On remarque que la force de flexion nécessaire pour incliner le collier 2 par rapport au bas de coque 3 augmente de manière sensiblement linéaire avec la proportion de microbilles de verre. Avantageusement, la proportion de microbilles 12 de verre est comprise entre 5% et 25% inclus, voire entre 10% et 15% inclus du poids de l'élément.

Avantageusement, le matériau 10 sera choisi de sorte à conserver une rigidité habituelle de la coque externe d'une chaussure de ski. Selon l'invention, on considère que le matériau plastique obtenu est rigide quand son module de flexion est supérieur ou égale à 100 MPa. On note que cela induit un matériau de rigidité supérieure ou égale à celle d'une coque en polyuréthane de dureté égale à 45 Shore D. Ainsi, le matériau 10 présente avantageusement une dureté comprise entre 45 et 65 Shore D, de préférence entre 50 et 60 Shore D. Cela signifie que le matériau polymère 11 utilisé présente aussi avantageusement une dureté supérieure ou égale à celle d'une coque en polyuréthane de dureté égale à 45 Shore D. Il peut ainsi présenter une dureté comprise entre 50 et 60 Shore D. De plus, le module de flexion du matériau polymère 11 utilisé est avantageusement compris entre 100 et 200 MPa inclus. Le matériau polymère 11 utilisé est donc rigide. L'élément de chaussure de sport de l'invention est ainsi un élément comprenant au moins une partie de paroi rigide, c'est-à-dire qu'elle comprend une rigidité nettement supérieure à un caoutchouc par exemple.

D'autre part, en cas de choc contre l'élément de chaussure de ski, par exemple consécutivement à une chute de l'utilisateur, les microbilles de verre contenues dans l'élément peuvent se casser. Ainsi, au moins une partie de l'énergie du choc peut être absorbée par l'élément. Le pied et/ou la jambe de l'utilisateur peuvent être ainsi préservé d'une blessure.

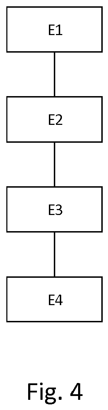

L'invention se rapporte également à un procédé de fabrication d'un tel élément de chaussure de ski, tel qu'illustré schématiquement par la figure 4. Dans une première étape E1, on approvisionne des microbilles de verre telles que définies précédemment. Les microbilles de verre peuvent alors optionnellement faire l'objet d'un traitement de surface pour augmenter leur résistance et/ou pour améliorer leur compatibilité avec le polymère utilisé.

Dans une deuxième étape, dite étape de granulation E2, on fabrique le matériau 10 par l'incorporation de microbilles 12 de verre dans un polymère 11, de préférence un matériau thermoplastique. Le matériau 10 résultant se présente alors selon le mode de réalisation sous la forme de granulés comprenant les microbilles de verre enrobées de polyuréthane mélangées à du polyuréthane. Les granulés peuvent prendre la forme de cylindres, de grains de riz, ou être sphériques, et peuvent être de dimension de l'ordre du millimètre. L'étape de granulation E2 peut être réalisée au moyen d'une extrudeuse bi-vis.

Dans une étape d'injection E3, on injecte le matériau 10 dans un moule d'injection. A cet effet les granulés sont chauffés jusqu'à une température permettant de faire fondre le polyuréthane. Les billes de verre supportent la température nécessaire à l'injection et conservent leur forme initiale, généralement en forme de sphère. Les microbilles de verre agissent alors comme un tapis roulant et favorisent l'écoulement de la matière dans le moule. Le matériau peut donc pénétrer rapidement et efficacement dans les différents recoins du moules. La rapidité de l'injection permet également une bonne homogénéité de la température du matériau dans le moule. Il en résulte un élément injecté de qualité, dépourvu de défaut de remplissage, de défaut de retrait (ou retassure) ou de défaut de gauchissement. Des éléments de géométrie complexe peuvent ainsi facilement être moulés. Une température d'injection et/ou une pression d'injection plus faible peut également être envisagée.

Malgré leur forte résistance à la compression, des microbilles de verre peuvent se casser lors de l'étape de granulation E2 ou lors de la première étape d'injection E3. Pour anticiper la rupture de certaines microbilles de verre, une proportion plus élevée de microbilles de verre peut être employée pour la fabrication du matériau. Par exemple, lors de l'étape de granulation, on peut utiliser une proportion d'environ 25% de microbilles de verre par rapport au poids total du matériau fabriqué.

Selon une variante de réalisation, le procédé de fabrication comprend au moins une deuxième étape d'injection E4 d'un matériau différent du matériau 10 mis en œuvre lors de l'étape E3. Le deuxième matériau peut être un polymère muni de charges par exemple des microbilles de verre creuses de dimension ou de densité différente des microbilles de verre mises en œuvre précédemment. Le deuxième matériau pourrait également être un polymère chargé de fibres de verre ou de fibres de carbone, ou un polymère non chargé. La deuxième étape d'injection E4 peut être réalisée dans le même moule d'injection selon un principe de co-injection, comprenant l'injection successive et rapprochée de deux matériaux à travers la même buse d'injection, ou éventuellement dans un autre moule selon un principe de surinjection. En variante, ce deuxième matériau pourrait être injecté avant la mise en œuvre de l'injection du matériau de l'invention selon l'étape E3 du procédé de l'invention. Ainsi, les propriétés physiques du matériau comprenant les microbilles de verre peuvent être cumulées avec les propriétés physiques d'un deuxième matériau.

Il ressort des éléments précédents que l'invention permet de fabriquer un élément de chaussure de ski comprenant au moins une partie de paroi comprenant un matériau polymère chargé de microbilles de verre creuses. En variante, les microbilles peuvent être obtenues à partir de différents matériaux naturels ou synthétiques. Par exemple, on pourrait envisager, outre les microsphères de verre, des microsphères de polymères (microbilles de plastique notamment) tels que du polyéthylène ou du polystyrène, ou encore des microsphères de céramique. .Avantageusement, cette partie de paroi comprend ce matériau sur toute son épaisseur. En variante, ce matériau s'étend sur une partie seulement de l'épaisseur qui se présente sous une structure multicouche. D'autre part, le matériau pourrait comprendre une autre charge en complément des microbilles de verre, par exemple des fibres de verre, notamment des fibres de verre très courtes.

L'invention a notamment été présentée pour une chaussure alpine, pour former un élément de chaussure de ski et en particulier pour former une paroi d'un bas de coque et/ou d'un collier pour obtenir un flex ou une raideur arrière/avant optimale. Cette invention peut également être envisagée pour :
- Former une zone localisée plus rigide d'une partie de chaussure, comme par exemple les trottoirs d'une semelle de chaussure de ski ou des renforts arrière ou latéraux de la paroi de la partie de chaussure, en particulier d'une coque ou d'un collier ;
- Former une semelle allégée d'une coque de chaussure de ski, tout en conservant une rigidité suffisante, incluant éventuellement des trottoirs avant et/ou arrière ;
- Former un élément plastique d'une chaussure de ski de fond, comme en particulier un contrefort arrière s'étendant à l'arrière et/ou sur les côtés latéraux de la chaussure et/ou un collier articulé sur ce contrefort. Dans ce cas, c'est la raideur en flexion latérale de la chaussure qui est optimisée.

De plus, l'invention est naturellement adaptée à toutes les chaussures de sport de glisse, comprenant une partie en matière plastique rigide, dont la propriété de flexion nécessite une optimisation, et dont la légèreté est avantageuse.

## Revendications

1. Elément de chaussure de sport, comprenant tout ou partie d'une paroi destinée à former au moins une partie d'une paroi latérale et/ou frontale et/ou arrière et/ou inférieure d'une chaussure de sport, tel que tout ou partie de sa paroi comprend un matériau (10) comprenant un polymère (11) et une charge de microbilles (12) creuses, le polymère (11) étant un polyuréthane thermoplastique, les microbilles (12) étant des microbilles de verre, les microbilles étant espacées les unes des autres et complètement enrobées de polyuréthane.

2. Elément de chaussure de sport selon la revendication précédente, **caractérisé en ce que** ladite paroi comprenant un polymère (11) et une charge de microbilles (12) est une paroi rigide.

3. Elément de chaussure de sport selon l'une des revendications précédentes, **caractérisé en ce que** ladite paroi comprend une proportion de microbilles (12) comprise entre 5% et 25% inclus, voire entre 10% et 15% inclus, du poids de ladite tout ou partie de paroi de l'élément de chaussure de sport.

4. Elément de chaussure de sport selon l'une des revendications précédentes, **caractérisé en ce que** les microbilles (12) ont un diamètre moyen compris entre 15 et 25 µm et/ou une densité comprise entre 0,30 et 0,60 g/cm3.

5. Elément de chaussure de sport selon l'une des revendications précédentes, **caractérisé en ce que** les microbilles (12) ont une résistance à une compression supérieure ou égale à 1000 bars, voire à 1100 bars.

6. Elément de chaussure de sport selon l'une des revendications précédentes, **caractérisé en ce que** ladite paroi comprenant un polymère (11) et une charge de microbilles (12) a un module de flexion supérieur ou égal à 100 MPa, et/ou présente une rigidité supérieure ou égale à la rigidité d'un élément de même forme et constitué uniquement d'un polyuréthane d'une dureté de 45 Shore D.

7. Elément de chaussure de sport selon l'une des revendications précédentes, **caractérisé en ce que** le polymère (11) présente une dureté supérieure ou égale à celle d'un polyuréthane de même forme et de dureté égale 45 Shore D et/ou **en ce que** le polymère (11) présente une dureté comprise entre 50 et 60 Shore D inclus, et/ou **en ce que** le polymère (11) comprend un module de flexion compris entre 100 et 200 MPa inclus.

8. Elément de chaussure de sport selon l'une des revendications précédente, **caractérisé en ce qu'**il est destiné à contribuer à une raideur en flexion d'une chaussure de sport, notamment **en ce que** l'élément forme tout ou partie d'une coque externe, ou d'un bas de coque (3), ou d'un collier (2), ou d'une languette de la chaussure de sport.

9. Elément de chaussure de sport selon l'une des revendications précédente, **caractérisé en ce qu'**il forme tout ou partie d'une semelle de chaussure et/ou **en ce qu'**il forme au moins un trottoir de chaussure de sport.

10. Chaussure de ski (1), **caractérisée en ce qu'**elle comprend au moins un élément de chaussure de sport selon l'une des revendications précédentes.

11. Chaussure de ski (1) selon la revendication précédente, **caractérisée en ce qu'**elle comprend un collier (2) articulé sur un bas de coque (3), et **en ce que** le collier et/ou le bas de coque sont des éléments de chaussure selon l'une des revendications 1 à 9.

12. Procédé de fabrication d'un élément de chaussure de sport selon l'une des revendications 1 à 9, **caractérisé en ce qu'**il comprend une étape d'injection (E3) dans un moule d'injection d'un matériau (10) comprenant un polymère (11) et une charge de microbilles (12) creuses.

13. Procédé de fabrication d'un élément de chaussure de sport selon la revendication précédente, **caractérisé en ce qu'**il comprend une étape de granulation (E2) comprenant la fabrication du premier matériau (10) par l'incorporation de microbilles (12) dans un polymère (11), comprenant une étape d'enrobage de microbilles (12) par une couche du matériau polymère (11).

14. Procédé de fabrication d'un élément de chaussure de sport selon l'une des revendications 12 ou 13, **caractérisé en ce qu'**il comprend une deuxième étape d'injection (E4) d'un deuxième matériau différent du premier matériau dans le même moule d'injection selon un principe de co-injection ou de surinjection.

## Patentansprüche

1. Sportschuhelement, das eine Wand ganz oder teilweise umfasst, welche dazu bestimmt ist, zumindest einen Teil einer Seitenwand und/oder Vorderwand und/oder Rückwand und/oder Unterwand eines Sportschuhs zu bilden, wobei die gesamte oder ein Teil der Wand ein Material (10) umfasst, das ein Polymer (11) und eine Füllung aus hohlen Mikrokugeln (12) umfasst, wobei das Polymer (11) ein thermoplastisches Polyurethan ist, die Mikrokugeln (12) Glasmikrokugeln sind, die Mikrokugeln voneinander beabstandet und vollständig von Polyurethan umhüllt sind.

2. Sportschuhelement nach dem vorhergehenden Anspruch, **dadurch gekennzeichnet, dass** die genannte Wand, die ein Polymer (11) und eine Füllung aus Mikrokugeln (12) umfasst, eine starre Wand ist.

3. Sportschuhelement nach einem der vorhergehenden Ansprüche, **dadurch gekennzeichnet, dass** die genannte Wand einen Anteil an Mikrokugeln (12) zwischen einschließlich 5 % und 25 %, insbesondere zwischen einschließlich 10 % und 15 % des Gewichts der gesamten oder eines Teils der Wand des Sportschuhelements umfasst.

4. Sportschuhelement nach einem der vorhergehenden Ansprüche, **dadurch gekennzeichnet, dass** die Mikrokugeln (12) einen mittleren Durchmesser zwischen 15 und 25 µm und/oder eine Dichte zwischen 0,30 und 0,60 g/cm³ aufweisen.

5. Sportschuhelement nach einem der vorhergehenden Ansprüche, **dadurch gekennzeichnet, dass** die Mikrokugeln (12) eine Druckfestigkeit größer oder gleich 1000 bar, insbesondere größer oder gleich 1100 bar aufweisen.

6. Sportschuhelement nach einem der vorhergehenden Ansprüche, **dadurch gekennzeichnet, dass** die genannte Wand, die ein Polymer (11) und eine Füllung aus Mikrokugeln (12) umfasst, einen Biegemodul größer oder gleich 100 MPa aufweist und/oder eine Steifigkeit aufweist, die größer oder gleich der Steifigkeit eines Elements gleicher Form ist, das ausschließlich aus einem Polyurethan mit einer Härte von 45 Shore D besteht.

7. Sportschuhelement nach einem der vorhergehenden Ansprüche, **dadurch gekennzeichnet, dass** das Polymer (11) eine Härte aufweist, die größer oder gleich derjenigen eines Polyurethans gleicher Form und einer Härte von 45 Shore D ist, und/oder dass das Polymer (11) eine Härte zwischen einschließlich 50 und 60 Shore D aufweist, und/oder dass das Polymer (11) einen Biegemodul zwischen einschließlich 100 und 200 MPa aufweist.

8. Sportschuhelement nach einem der vorhergehenden Ansprüche, **dadurch gekennzeichnet, dass** es dazu bestimmt ist, zur Biegesteifigkeit eines Sportschuhs beizutragen, insbesondere dadurch, dass das Element ganz oder teilweise eine Außenschale oder einen Unterschalenteil (3) oder einen Schaft (2) oder eine Zunge des Sportschuhs bildet.

9. Sportschuhelement nach einem der vorhergehenden Ansprüche, **dadurch gekennzeichnet, dass** es ganz oder teilweise eine Schuhsohle bildet und/oder dass es mindestens einen Seitenrand eines Sportschuhs bildet.

10. Skischuh (1), **dadurch gekennzeichnet, dass** er mindestens ein Sportschuhelement nach einem der vorhergehenden Ansprüche umfasst.

11. Skischuh (1) nach dem vorhergehenden Anspruch, **dadurch gekennzeichnet, dass** er einen Schaft (2) umfasst, der an einem Unterschalenteil (3) angelenkt ist, und dass der Schaft und/oder der Unterschalenteil Sportschuhelemente nach einem der Ansprüche 1 bis 9 sind.

12. Verfahren zur Herstellung eines Sportschuhelements nach einem der Ansprüche 1 bis 9, **dadurch gekennzeichnet, dass** es einen Injektionsschritt (E3) in eine Spritzgießform eines Materials (10) umfasst, das ein Polymer (11) und eine Füllung aus hohlen Mikrokugeln (12) umfasst.

13. Verfahren zur Herstellung eines Sportschuhelements nach dem vorhergehenden Anspruch, **dadurch gekennzeichnet, dass** es einen Granulationsschritt (E2) umfasst, bei dem das erste Material (10) durch Einarbeitung von Mikrokugeln (12) in ein Polymer (11) hergestellt wird, wobei ein Schritt des Beschichtens der Mikrokugeln (12) mit einer Schicht des Polymermaterials (11) vorgesehen ist.

14. Verfahren zur Herstellung eines Sportschuhelements nach einem der Ansprüche 12 oder 13, **dadurch gekennzeichnet, dass** es einen zweiten Injektionsschritt (E4) eines zweiten Materials, das sich vom ersten Material unterscheidet, in dieselbe Spritzgießform gemäß einem Prinzip der Co-Injektion oder des Umspritzens umfasst.

## Claims

1. Sports shoe element comprising all or part of a wall intended to form at least a portion of a lateral and/or front and/or rear and/or bottom wall of a sports shoe, wherein all or part of said wall comprises a material (10) including a polymer (11) and a filler of hollow microspheres (12), the polymer (11) being a thermoplastic polyurethane, the microspheres (12) being glass microspheres, the microspheres being spaced apart from one another and completely encapsulated in polyurethane.

2. Sports shoe element according to the preceding claim, **characterized in that** said wall comprising a polymer (11) and a filler of microspheres (12) is a rigid wall.

3. Sports shoe element according to any one of the preceding claims, **characterized in that** said wall comprises a proportion of microspheres (12) ranging from 5% to 25% inclusive, or even from 10% to 15% inclusive, of the weight of said entire wall or wall portion of the sports shoe element.

4. Sports shoe element according to any one of the preceding claims, **characterized in that** the microspheres (12) have an average diameter between 15 and 25 µm and/or a density between 0.30 and 0.60 g/cm³.

5. Sports shoe element according to any one of the preceding claims, **characterized in that** the microspheres (12) have a compressive strength greater than or equal to 1000 bar, or even 1100 bar.

6. Sports shoe element according to any one of the preceding claims, **characterized in that** said wall comprising a polymer (11) and a filler of microspheres (12) has a flexural modulus greater than or equal to 100 MPa, and/or exhibits a stiffness greater than or equal to that of an element of the same shape made solely of a polyurethane having a hardness of 45 Shore D.

7. Sports shoe element according to any one of the preceding claims, **characterized in that** the polymer (11) has a hardness greater than or equal to that of a polyurethane of the same shape and having a hardness of 45 Shore D, and/or **in that** the polymer (11) has a hardness between 50 and 60 Shore D inclusive, and/or **in that** the polymer (11) has a flexural modulus between 100 and 200 MPa inclusive.

8. Sports shoe element according to any one of the preceding claims, **characterized in that** it is intended to contribute to a bending stiffness of a sports shoe, in particular **in that** the element forms all or part of an outer shell, or a lower shell (3), or a cuff (2), or a tongue of the sports shoe.

9. Sports shoe element according to any one of the preceding claims, **characterized in that** it forms all or part of a shoe sole and/or forms at least one sidewall of a sports shoe.

10. Ski boot (1), **characterized in that** it comprises at least one sports shoe element according to any one of the preceding claims.

11. Ski boot (1) according to the preceding claim, **characterized in that** it comprises a cuff (2) articulated on a lower shell (3), and **in that** the cuff and/or the lower shell are sports shoe elements according to any one of claims 1 to 9.

12. Method for manufacturing a sports shoe element according to any one of claims 1 to 9, **characterized in that** it comprises an injection step (E3) in an injection mold of a material (10) comprising a polymer (11) and a filler of hollow microspheres (12).

13. Method for manufacturing a sports shoe element according to the preceding claim, **characterized in that** it comprises a granulation step (E2) including the production of the first material (10) by incorporating microspheres (12) into a polymer (11), comprising a step of coating the microspheres (12) with a layer of the polymer material (11).

14. Method for manufacturing a sports shoe element according to any one of claims 12 or 13, **characterized in that** it comprises a second injection step (E4) of a second material different from the first material into the same injection mold according to a co-injection or over-molding principle.
